# EUROPÄISCHE PATENTSCHRIFT

(11) **EP 3 548 341 B1**
(45) Veröffentlichungstag und Bekanntmachung des Hinweises auf die Patenterteilung: **06.01.2021**
(21) Anmeldenummer: 17794735.5
(22) Anmeldetag: 08.11.2017
(51) Int. Cl.: B60R 21/264, B60R 21/272

(54) **GASGENERATOR, GASSACKMODUL UND FAHRZEUGSICHERHEITSSYSTEM**
GAS GENERATOR, AIRBAG MODULE AND VEHICLE SAFETY SYSTEM
GÉNÉRATEUR DE GAZ, MODULE AIRBAG ET SYSTÈME DE PROTECTION D'OCCUPANTS DE VÉHICULES

(30) Priorität: 02.12.2016 DE 102016123312
(43) Veröffentlichungstag der Anmeldung: 09.10.2019
(73) Patentinhaber: ZF Airbag Germany GmbH, 84544 Aschau a. Inn (DE)
(72) Erfinder: BIERWIRTH, Sebastian, 83562 Rechtmehring (DE); EBNER, Johannes, 84453 Mühldorf am Inn (DE); OBERSTARR, Martin, 84570 Polling (DE)
(74) Vertreter: ZF Patentabteilung - DIPS
(86) Internationale Anmeldenummer: PCT/EP2017/078564
(87) Internationale Veröffentlichungsnummer: WO 2018/099700

(56) Entgegenhaltungen:
- EP-A1- 2 822 817
- DE-A1- 19 822 654
- DE-A1- 19 903 237
- DE-A1-102013 216 401
- DE-U1-202004 012 722

## Beschreibung

Die Erfindung betrifft einen Gasgenerator nach dem Oberbegriff des Patentanspruchs 1. Ferner betrifft die Erfindung ein Gassackmodul mit einem erfindungsgemäßen Gasgenerator und ein Fahrzeugsicherheitssystem mit einem erfindungsgemäßen Gasgenerator oder einem erfindungsgemäßen Gassackmodul.

Es ist bekannt, dass Gasgeneratoren Brennkammersiebe aufweisen. Diese dienen insbesondere zum Zurückhalten von Schlacke oder Treibstoffpartikeln, welche bei Aktivierung des Gasgenerators gebildet werden und in einem innerhalb des Gasgenerators ausbildbaren Gasstrom von Abbrandgas transportiert werden können. Brennkammersiebe des Stands der Technik weisen oftmals den Nachteil auf, dass die Brennkammersiebe, die auch als Brennkammerfilter bezeichnet werden können, ungleichmäßig durchströmt werden, so dass eine ungleichmäßige Filterwirkung bezüglich des Zurückhaltens bzw. Filterns von Schlacke oder Treibstoffpartikel eintreten kann. Außerdem wird der Bauraum für Treibstoff durch bekannte Brennkammer-Siebkonstruktionen oftmals stark eingeschränkt.

Es ist ständiges Bestreben, die Strömung, insbesondere die Strömung von Abbrandgas, in Kammern von Gasgeneratoren, vorzugsweise in Brennkammern oder Filterkammern, zu optimieren. Außerdem ist es oftmals nötig, für einen Treibstoff, insbesondere für ein Treibstoffbett, größtmöglich Platz bzw. Bauraum zur Verfügung zu stellen.

Aus der Schrift EP 2 822 817 A1 ist ein Gasgenerator der eingangs genannten Art bekannt.

Die Aufgabe der Erfindung besteht darin, einen weiterentwickelten Gasgenerator mit einem Brennkammersieb anzugeben, wobei die Strömung in einer Kammer, insbesondere in einer Gaskammer, des Gasgenerators optimiert ist. Außerdem soll eine Sieb- bzw. Filterfläche des Brennkammersiebs gleichmäßig ausgenutzt, insbesondere durchströmt, werden können. Weitere Aufgabe der Erfindung ist es, eine einfache Herstellung des Gasgenerators, insbesondere eine vereinfachte Montage des Brennkammersiebs im Gasgenerator, zu ermöglichen. Gleichzeitig soll ein größtmöglicher Platz bzw. Raum für in einer Kammer befindlichen Treibstoff geschaffen werden.

Außerdem ist es Aufgabe der Erfindung, ein Gassackmodul sowie ein Fahrzeugsicherheitssystem mit einem weiterentwickelten Gasgenerator anzugeben.

Erfindungsgemäß wird diese Aufgabe im Hinblick auf einen Gasgenerator durch den Gegenstand des Patentanspruches 1, im Hinblick auf ein Gassackmodul durch den Gegenstand des Patentanspruches 11 und im Hinblick auf ein Fahrzeugsicherheitssystem durch den Gegenstand des Patentanspruches 12 gelöst.

Zur Lösung der eingangs genannten Aufgaben sieht die Erfindung einen Gasgenerator vor, der eine Anzündeinheit mit einem Anzünder, eine der Anzündeinheit axial nachgelagerte langgestreckte, zylindrische Kammer und eine der Kammer axial nachgelagerte Diffusorkammer, die von einem Diffusor umfasst ist, vorsieht. Der Gasgenerator umfasst des Weiteren ein Brennkammersieb, das ein anzünderseitiges Ende und ein diffusorseitiges Ende aufweist und in der langgestreckten, zylindrischen Kammer angeordnet ist. Das Brennkammersieb läuft in Längsrichtung des Gasgenerators, ausgehend von dem Anzünder hin zu dem Diffusor, verjüngend zu, und das Brennkammersieb ist am diffusorseitigen Ende derart in ein topfartiges Element eingeführt, dass das Brennkammersieb an einem Topfboden des topfartigen Elements aufliegt.

Bei der langgestreckten, zylindrischen Kammer kann es sich um eine Druckgaskammer handeln, welche im Ruhezustand des Gasgenerators, also vor dessen Aktivierung, ein unter Druck stehendes Druckgas bzw. Druckgasgemisch umfasst. Demnach kann der erfindungsgemäße Gasgenerator als Hybridgasgenerator ausgebildet sein. Des Weiteren ist es möglich, dass es sich bei der langgestreckten, zylindrischen Kammer um eine Brennkammer handelt, welche neben einem Treibstoff lediglich Atmosphärendruck aufweist, so dass es sich bei dem Gasgenerator um einen pyrotechnischen Gasgenerator handeln kann.

Die Kammerwandung, insbesondere die Wandung der Druckgaskammer, ist ein Teil des Außengehäuses des Gasgenerators.

Aufgrund des ausgebildeten Brennkammersiebs wird zum einen die Strömung bzw. der nach Aktivierung des Gasgenerators ausgebildete Gasstrom von Abbrandgasen in der Brennkammer optimiert. Des Weiteren wird eine Sieb- bzw. Filterfläche des Brennkammersiebs optimal, insbesondere gleichmäßig, ausgenutzt.

Das Brennkammersieb kann aus Streckmetall und/oder Lochblech und/oder Gewebe bestehen. Das Brennkammersieb kann insbesondere als konisches Kegelsegment, insbesondere als Kegelstumpfsegment, ausgebildet sein. Die Länge des Brennkammersiebs kann insbesondere einem Viertel der Länge der Kammer, insbesondere einem Drittel der Länge der Kammer, insbesondere der Hälfte der Länge der Kammer, entsprechen. Die Länge des Brennkammersiebs entspricht der Längserstreckung des Brennkammersiebs, d.h. der Erstreckung vom anzünderseitigen Ende zum diffusorseitigen Ende des Brennkammersiebs.

Ein Abschnitt des Brennkammersiebs mit größtem Durchmesser, insbesondere das anzünderseitige Ende des Brennkammersiebs, kann derart dimensioniert sein, dass das Brennkammersieb mittels (leichten) Presssitz an einer Innenseite einer Kammerwandung der Kammer anliegt.

Das anzünderseitige Ende des Brennkammersiebs liegt vorzugsweise nicht am Anzünder an. Vielmehr handelt es sich dabei um das Ende des Brennkammersiebs, das zur Anzündeinheit weist bzw. in Richtung der Anzündeinheit ausgerichtet ist. Das diffusorseitige Ende des Brennkammersiebs liegt vorzugsweise ebenfalls nicht an der Diffusorkammer an. Vielmehr handelt es sich bei dem diffusorseitigen Ende des Brennkammersiebs um das Ende des Brennkammersiebs, das in Richtung der Diffusorkammer weist bzw. in Richtung der Diffusorkammer ausgerichtet ist. Vorzugsweise ist das Brennkammersieb, insbesondere das anzünderseitige Ende des Brennkammersiebs, derart ausgebildet bzw. dimensioniert, dass kein in der Kammer befindlicher Treibstoff zwischen der Außenseite des Brennkammersiebs und der Innenseite der Kammerwandung der Kammer eindringen kann.

Das Brennkammersieb kann auch als Filtertüte bezeichnet werden. Vorzugsweise weist das Brennkammersieb eine rotationssymmetrische Kegelstumpfform auf. Im Inneren des Brennkammersiebs, d.h. in dem von der Innenseite des Brennkammersiebs gebildeten Hohlabschnitt, kann sich Treibstoff, insbesondere in Form von Treibstofftabletten und/oder Treibstoffpellets und/oder Treibstoffgranulat und/oder Treibstoffringen und/oder vorzugsweise extrudierten Formkörpern, befinden. Der Kammerabschnitt zwischen der Anzündeinheit und dem Brennkammersieb kann ebenfalls (vollständig) mit Treibstoff befüllt sein.

Vorzugsweise nimmt ein von Abbrandgas durchströmbarer Querschnitt eines zwischen dem Brennkammersieb und der Innenseite der Kammerwandung ausgebildeten Zwischenraums in Längsrichtung des Gasgenerators, vorzugsweise in einer Hauptströmungsrichtung des Abbrandgases, insbesondere kontinuierlich, zu. Die Hauptströmungsrichtung des Abbrandgases verläuft hierbei im Wesentlichen parallel zu der Längsachse des Gasgenerators. Der von Abbrandgas durchströmbare Querschnitt wird insbesondere zwischen der Außenseite des Brennkammersiebs und der Innenseite der Kammerwandung, insbesondere der Innenseite des Abschnitts der Kammerwandung, die das Brennkammersieb umgibt, gebildet.

Das Brennkammersieb weist vorzugsweise vollumfänglich eine Filterfläche auf, die von innen, d.h. ausgehend von der Längsachse des Brennkammersiebs nach außen, d.h. in Richtung der Außenseite des Brennkammersiebs von Abbrandgas durchströmbar ist. Nachdem im Funktionsfall Abbrandgas bzw. Gas durch die Filterfläche des Brennkammersiebs geströmt ist, kann anschließend das Gas durch den genannten durchströmbaren Querschnitt in Richtung des diffusorseitigen Endes der Kammer strömen.

Da der durchströmbare Querschnitt zwischen dem Brennkammersieb und der Innenseite der Kammerwandung, betrachtet von dem anzünderseitigen Ende des Brennkammersiebs hin zu dessen diffusorseitgen Ende, kontinuierlich zunimmt, kann über die gesamte Länge bzw. Längserstreckung des Brennkammersiebs Gas in den Zwischenraum einströmen, ohne dass die Strömungsgeschwindigkeit des Gases ansteigen muss. Aufgrund dessen wird das Brennkammersieb über die ganze Filterfläche gleichmäßig durchströmt und damit optimal ausgenutzt.

Mit anderen Worten nimmt ein von Abbrandgas durchströmbare Querschnitt eines zwischen dem Brennkammersieb und der Innenseite der Kammerwandung ausgebildeten Zwischenraums in Längsrichtung des Gasgenerators, vorzugsweise in einer Hauptströmungsrichtung des Abbrandgases, insbesondere kontinuierlich, zu. Der Zwischenraum umgibt die Außenseite des Brennkammersiebs.

Aufgrund der erfindungsgemäßen Ausbildung des Brennkammersiebs wird ein Staudruck am Ende des Auslasses der Kammer bzw. im Bereich des diffusorseitgen Endes des Brennkammersiebs vermieden.

In einer Ausführungsform der Erfindung kann das Brennkammersieb am diffusorseitigen Ende einen, insbesondere vollumfänglich ausgebildeten, Flansch aufweisen. Der Flansch kann beispielsweise ringförmig ausgebildet sein. Vorzugsweise ist der Flansch rotationssymmetrisch ausgebildet. Im Flansch können Gasdurchlassöffnungen ausgebildet sein. Des Weiteren ist es möglich, dass der Flansch derart geformt ist, dass der Flansch bei einem Anliegen an der Innenseite der Kammerwandung Gasdurchlassöffnungen bildet. Mit anderen Worten kann die Kante des Flansches Ausnehmungen aufweisen, wobei aufgrund der Ausnehmungen bei Anliegen des Flansches an der Innenseite der Kammerwandung Gasdurchlassöffnungen gebildet werden. Der Flansch des Brennkammersiebs dient insbesondere zur Befestigung des Brennkammersiebs bzw. dient er auch als Zentrierhilfe oder auch Positionierhilfe des Brennkammersiebs bei dessen Montage bei der Herstellung des Gasgenerators.

Des Weiteren kann das Brennkammersieb am diffusorseitigen Ende auf einem Absatzelement aufsitzen bzw. anliegen. Das Absatzelement kann insbesondere eine hohlzylinderförmige oder hohle kegelstumpfförmige Gaszwischenkammer umfassen. Die Gaszwischenkammer kann eine Fluidverbindung von dem beschriebenen Zwischenraum zum Kammer-Auslass, insbesondere zum Druckgaskammer-Auslass bzw. Brennkammer-Auslass, bilden. Die hohlzylinderförmige oder hohle kegelstumpfförmige Gaszwischenkammer wird insbesondere durch eine (rotationssymmetrische) Wandung gebildet, wobei die Wandung Gasdurchlassöffnungen aufweist. Dadurch kann aus dem beschriebenen Zwischenraum Gas in die hohle zylinderförmige oder hohle kegelstumpfförmige Gaszwischenkammer strömen.

Der Flansch des Brennkammersiebs kann vorzugsweise mit dem Absatzelement verbunden sein.

In einer Ausführungsform, in der das Brennkammersieb keinen Flansch aufweist, umfasst das Absatzelement vorzugsweise einen Absatzflansch. Auch dieser Absatzflansch kann rotationssymmetrisch ausgebildet sein. Der Absatzflansch kann Gasdurchlassöffnungen aufweisen. In einer weiteren Ausführungsform der Erfindung ist es möglich, dass der Absatzflansch eine derartige Umfangskante mit Ausnehmungen aufweist, so dass bei einem Anliegen des Absatzflansches an der Innenseite der Kammerwandung Gasdurchlassöffnungen gebildet werden.

Es ist möglich, dass das Absatzelement einen zur Anzündeinheit weisenden Hülsenabschnitt aufweist, in den das diffusorseitige Ende des Brennkammersiebs eingeführt ist. Vorzugsweise ist ein derartiger Hülsenabschnitt mit dem beschriebenen Absatzflansch kombiniert. Der Hülsenabschnitt ist vorzugsweise derart ausgebildet, dass die Öffnung der Hülse in Richtung der Anzündeinheit ausgebildet ist, so dass das diffusorseitige Ende des Brennkammersiebs in den Hülsenabschnitt eingeführt bzw. eingestellt oder eingepresst werden kann. Vorzugsweise liegt das diffusorseitige Ende des Brennkammersiebs am Absatzelement auf bzw. berührt das Absatzelement. Insbesondere ist es möglich, dass das diffusorseitige Ende des Brennkammersiebs den Absatzflansch berührt.

Das Absatzelement dient insbesondere als ein das Brennkammersieb axial abstützendes Element. Vorzugsweise ist die hohle kegelstumpfförmige oder hohle zylinderförmige Gaszwischenkammer bildende Wandung mit der Innenseite der Kammer, insbesondere der Druckgaskammer bzw. Brennkammer, verbunden oder liegt an dieser an.

Es ist möglich, dass das Brennkammersieb mit dem Absatzelement einteilig, d.h. monolithisch, ausgebildet ist.

Erfindungsgemäß ist das Brennkammersieb am diffusorseitigen Ende derart in ein topfartiges oder becherartiges Element eingeführt, dass das Brennkammersieb an einem Topfboden oder Becherboden des Elements aufliegt. Der Topfboden oder Becherboden des Elements ist eine Absatzfläche, die als Verschluss des Brennkammersiebs dient. Hierdurch wird verhindert, dass Gas bzw. Abbrandgas am diffusorseitigen Ende des Brennkammersiebs in axialer Richtung ausströmen kann. Der Topfboden oder Becherboden des Elements bewirkt, dass das Abbrandgas durch die Filterfläche des Brennkammersiebs in den genannten Zwischenraum strömen muss.

Das Brennkammersieb umschließt mit anderen Worten einen Teil des Treibstoffbettes und weist Ausströmöffnungen für die Verbrennungsgase aus dem Treibstoffbett auf. In einer Ausführungsform des Gasgenerators kann auch Kaltgas durch die Filterfläche des Brennkammersiebs strömen. Dabei sind die Öffnungen im Brennkammersieb derart klein, dass die Treibstofftabletten, Treibstoffpellets oder Treibstoffgranulate zurückgehalten werden.

Nach dem Ausströmen des Gases aus dem Brennkammersieb prallen das Verbrennungsgas und die enthaltenen Schlackenteile auf die kalte Innenseite der Kammerwandung, sodass die Schlacke dort abgelagert wird und das Gas abgekühlt wird. Aufgrund eines ausgebildeten Absatzelements oder aufgrund eines topfartigen oder becherartigen Elements wird das diffusorseitige Ende des Brennkammersiebs verschlossen, so dass aus dem diffusorseitigen Ende kein Gas, insbesondere in axialer Richtung, ausströmen kann.

Das topfartige oder becherartige Element kann umfangsseitig mindestens zwei Laschen und/oder einen Umfangsflansch aufweisen. Mithilfe der Laschen und/oder des Umfangsflansches kann das topfartige oder becherartige Element im Generatorgehäuse, insbesondere innerhalb der Kammerwandung, zentriert werden. Zwischen dem Umfangsflansch und/oder den Laschen des topfartigen oder becherartigen Elements und der Innenseite der Kammerwandung wird ein, insbesondere ringförmiger, Kanal gebildet, durch den das Gas aus dem Zwischenraum in Richtung des Kammer-Auslasses, insbesondere des Druckgaskammer-Auslasses bzw. Brennkammer-Auslasses, strömen kann. Vorzugsweise weist der Kanal eine geringe Spaltbreite, insbesondere von ca. 1-2 mm, auf, so dass in diesem Abschnitt das Abbrandgas weiter abkühlt und Schlacke abgelagert werden kann.

Vorzugsweise weist der Gasgenerator ein dem topfartigen oder becherartigen Element in Längsrichtung des Gasgenerators, vorzugsweise in Hauptströmungsrichtung des Abbrandgases, axial nachgelagertes Stützelement auf. Das Stützelement kann beispielsweise aus Streckmetall und/oder Lochblech und/oder Gewebe und/oder Maschengestrick und/oder Drahtgewebe gebildet sein. Das Stützelement stützt das topfartige oder becherartige Element axial ab und lenkt bzw. lässt den Gasstrom vorzugsweise radial nach innen in Richtung der Längsachse des Gasgenerators strömen. Auch im Bereich des Stützelements wird das Abbrandgas weiter abgekühlt. Außerdem kann am Stützelement weiterhin Schlacke abgelagert werden.

Des Weiteren kann der Gasgenerator eine dem Stützelement in Längsrichtung des Gasgenerators, vorzugsweise in Hauptströmungsrichtung des Abbrandgases, axial nachgelagerte Verdämmung und/oder eine Scheibe mit Öffnungen aufweisen.

Aufgrund des dargestellten modularen Aufbaus des erfindungsgemäßen Gasgenerators können äußerst einfache und kostengünstige Bauteile verwendet werden.

Ein weiterer nebengeordneter Aspekt der Erfindung betrifft ein Gassackmodul mit einem erfindungsgemäßen Gasgenerator und einem von dem erfindungsgemäßen Gasgenerator aufblasbaren Gassack und einer Befestigungseinrichtung zur Anbringung des Gassackmoduls an einem Fahrzeug. Insbesondere betrifft der nebengeordnete Aspekt der Erfindung ein Gassackmodul mit einem erfindungsgemäßen Hybridgasgenerator oder einem erfindungsgemäßen pyrotechnischen Gasgenerator. Es ergeben sich ähnliche Vorteile, wie diese bereits im Zusammenhang mit dem erfindungsgemäßen Gasgenerator angegeben sind.

Ein weiterer nebengeordneter Aspekt der Erfindung betrifft ein Fahrzeugsicherheitssystem, insbesondere zum Schutz einer Person, beispielsweise eines Fahrzeuginsassen oder Passanten, mit einem erfindungsgemäßen Gasgenerator, einem von diesem aufblasbaren Gassack, als Teil eines Gassackmoduls, insbesondere eines erfindungsgemäßen Gassackmoduls, und einer elektronischen Steuereinheit, mittels der der erfindungsgemäße Gasgenerator bei Vorliegen einer Auslösesituation aktivierbar ist. Es ergeben sich ähnliche Vorteile, wie diese bereits im Zusammenhang mit dem erfindungsgemäßen Gasgenerator angegeben sind.

Die Erfindung wird im Folgenden anhand von Ausführungsbeispielen unter Bezugnahme auf die beigefügten, schematischen Skizzen näher erläutert.

Darin zeigen:
Fig. 1 einen Hybridgasgenerator gemäß einem ersten Ausführungsbeispiel;
Fig. 2 einen Hybridgasgenerator gemäß einem zweiten Ausführungsbeispiel;
Fig. 3 einen Hybridgasgenerator gemäß einem dritten Ausführungsbeispiel;
Fig. 4 einen erfindungsgemäßen pyrotechnischen Gasgenerator gemäß einem ersten Ausführungsbeispiel; und
Fig. 5 einen erfindungsgemäßen Hybridgasgenerator mit einem topfartigen Element.

Im Folgenden werden für gleiche und gleichwirkende Teile dieselben Bezugsziffern verwendet.

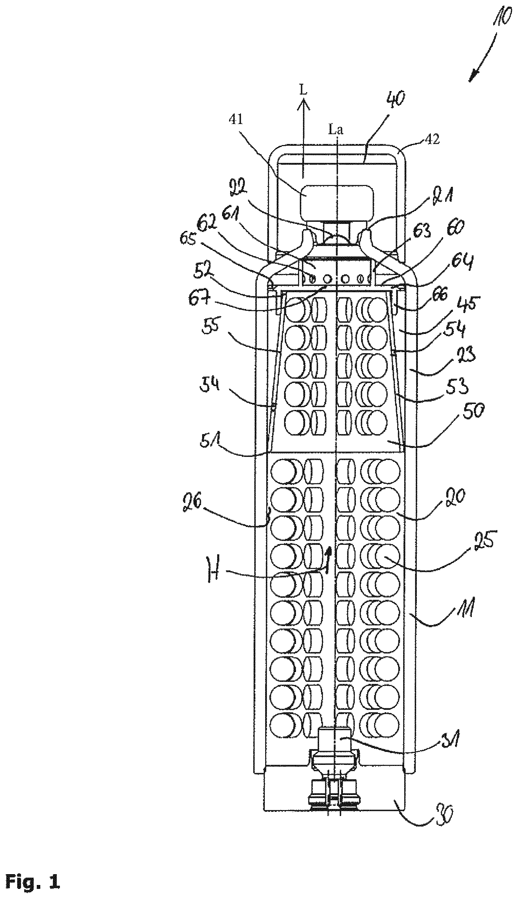

Der in Fig. 1 dargestellte Gasgenerator 10 ist ein Hybridgasgenerator. Dieser umfasst ein langgestrecktes rohrförmiges Gehäuse 11. Der Gasgenerator 10 dient zum Aufblasen eines Gassacks, insbesondere eines Airbags. Der Gasgenerator 10 umfasst eine zentrale, langgestreckte, zylindrische Kammer 20. Bei dieser Kammer handelt es sich um eine Druckgaskammer. Außerdem umfasst der Gasgenerator 10 eine Anzündeinheit 30. Die Kammer 20 ist an ihrem diffusorseitigen Auslass 21 mit einem Berstelement 22 verschlossen.

Die Kammer 20 ist mit einem Druckgas aus Helium, einem Helium/Argon-Gemisch oder einem Helium-Argon-Sauerstoff-Gemisch bei einem Druck zwischen 240 - 1.500 bar gefüllt.

Die Anzündeinheit 30 umfasst den Anzünder 31. Der Anzünder 31 ragt in die Kammer 20. Mithilfe des Anzünders 31 kann das in der Kammer 20 befindliche Treibstoffbett 25 entzündet werden. Das Treibstoffbett 25 kann beispielsweise aus Granulat und/oder gepressten Tabletten und/oder Extrudatkörpern mit axialem Durchgangskanal und/oder Extrudatkörper ohne axialen Durchgangskanal gebildet werden.

Der Gasgenerator 10 umfasst des Weiteren eine Diffusorkammer 40, welche von einem Diffusor 42 umfasst ist. Diese Diffusorkammer 40 weist Diffusoröffnungen (41) auf, durch die erzeugtes Gas ausströmen und beispielsweise in einem Airbag einströmen kann.

In der Kammer 20 ist ein Brennkammersieb 50 mit einem anzünderseitigen Ende 51 und einem diffusorseitigen Ende 52 angeordnet. Das Brennkammersieb 50 läuft in Längsrichtung L des Gasgenerators 10 zu bzw. ist dorthin verjüngend, insbesondere konisch, ausgebildet. Dabei ist die Längsrichtung L des Gasgenerators 10 eine Richtung, die ausgehend von dem Anzünder 31 hin zu dem Diffusor 42 weist, wobei die Längsrichtung L im Wesentlichen parallel zu der Längsachse La des Gasgenerators ausgerichtet ist. Weiterhin gibt es eine Hauptströmungsrichtung H eines Abbrandgases, welches bei bzw. nach Aktivierung des Gasgenerators in der Kammer 20 durch Abbrand des Treibstoffbetts 25 erzeugbar ist. Die Hauptströmungsrichtung H des Abbrandgases verläuft dabei ebenso im Wesentlichen parallel zu der Längsachse La des Gasgenerators. Somit verläuft das Brennkammersieb 50 auch in Hauptströmungsrichtung H des Abbrandgases verjüngend, insbesondere konisch, zu. Das Brennkammersieb 50 weist eine Filterfläche 53 auf. Diese Filterfläche 53 weist Filteröffnungen 54 auf. Das Brennkammersieb 50 kann aus Streckmetall oder Lochblech oder Gewebe gebildet sein. Im dargestellten Querschnitt ist die Form des Brennkammersiebs 50, nämlich die Form eines konischen Kegelsegments zu erkennen. Das anzünderseitige Ende 51 liegt, wie dies aus Fig. 1 hervorgeht, nicht an der Anzündeinheit 30 an. Vielmehr weist dieses Ende 51 zur Anzündeinheit 30. Das anzünderseitige Ende 51 ist derart dimensioniert, dass das Brennkammersieb 50 in leichtem Presssitz an der Innenseite 26 der Kammerwandung 23 anliegt.

Es ist zu erkennen, dass auch innerhalb des Brennkammersiebs 50 Teile des Treibstoffbettes 25 eingebracht sind. Zwischen dem Brennkammersieb 50, insbesondere zwischen der Außenseite 55 des Brennkammersiebs 50 und der Innenseite 26 der Kammerwandung 23 wird ein Zwischenraum 45 gebildet. Das anzünderseitige Ende 51 des Brennkammersiebs 50 ist vorzugsweise derart ausgebildet bzw. befindet sich in einem derartigen Presssitz in Bezug auf die Kammerwandung 23, dass der Treibstoff nicht in den Zwischenraum 45 gelangt.

Es ist zu erkennen, dass der durchströmbare Querschnitt des Zwischenraums 45 in Hauptströmungsrichtung H des Abbrandgases kontinuierlich zunimmt. Der durchströmbare Querschnitt des Zwischenraums 45 nimmt in gleichem Maße kontinuierlich zu, wie der Querschnitt des Brennkammersiebs 50 kontinuierlich abnimmt.

Das Brennkammersieb 50 sitzt am diffusorseitigen Ende 52 auf einem Absatzelement 60 auf. Das Absatzelement 60 umfasst eine hohlzylindrische Gaszwischenkammer 61. Die Gaszwischenkammer 61 weist Einströmöffnungen 62 auf. Die Gaseinströmöffnungen 62 sind in einer Wandung 63 der Gaszwischenkammer 61 ausgebildet. Die hohlzylindrische Gaszwischenkammer 61 ist auf einem Absatzelement-Flansch 64 ausgebildet. Der Absatzelement-Flansch 64 weist wiederum Gasdurchlassöffnungen 65 auf. Die Gasdurchlassöffnungen 65 schaffen eine Fluidverbindung vom Zwischenraum 45 in Richtung der Gaszwischenkammer 61. Das durch das Brennkammersieb 50, insbesondere durch die Filteröffnungen 54 austretende Gas strömt zunächst in Richtung des Absatzelement-Flansches 64, um anschließend durch die Gasdurchlassöffnungen 65 und die Einströmöffnungen 62 in die Gaszwischenkammer 61 zu gelangen. Bei ausreichend hohen ausgebildeten Druck in der Gaszwischenkammer 61 kann daraufhin das Berstelement 22 zum Bersten gebracht werden und somit die Kammer 20 an ihrem diffusorseitigen Auslass 21 geöffnet werden. Nach dem Bersten des Berstelements 22 gelangt das Gas anschließend in die Diffusorkammer 40 und durch Diffusoröffnungen 41 beispielsweise in einen Gassack.

Das Absatzelement 60 weist des Weiteren einen zur Anzündeinheit 30 weisenden Hülsenabschnitt 66 auf. Das diffusorseitige Ende 52 des Brennkammersiebs 50 ist in dem Hülsenabschnitt 66 eingeführt. Insbesondere liegt das diffusorseitige Ende 52 auf dem Absatzelement-Flansch 64 auf. Der Hülsenabschnitt 66 dient somit zur Befestigung des Brennkammersiebs 50. Das Absatzelement 60, insbesondere eine Absatzfläche 67 des Absatzelements 60, dient der Abdichtung des Brennkammersiebs 50 in Hauptströmungsrichtung H. Es kann also an dem diffusorseitigen Ende 52 des Brennkammersiebs 50 kein Abbrandgas aus dem Inneren des Brennkammersiebs 50 in axialer Richtung austreten.

Im Funktionsfall des Gasgenerators 10 wird das Brennkammersieb 50 von innen, d.h. von seinem Inneren heraus, ausgehend von der Längsachse La des Gasgenerators 10, nach außen, vorzugsweise in radialer Richtung, durchströmt. Dies erfolgt aufgrund der Filteröffnungen 54 in dem Brennkammersieb 50. Anschließend strömt das Gas an der Innenseite 26 der Kammerwandung 23, die im vorliegenden Fall die Wandung eines Kaltgasbehälters ist, entlang. Schlacke lagert sich dabei am Brennkammersieb 50 sowie an der Innenseite 26 der Kammerwandung 23 ab. Da der durchströmbare Querschnitt des Zwischenraums 45 zwischen dem Brennkammersieb 50 und der Innenseite 26 der Kammerwandung 23 in Längsrichtung L des Gasgenerators 10, also in Hauptströmungsrichtung H des Abbrandgases, kontinuierlich zunimmt, kann über die gesamte Länge des Brennkammersiebs 50 Gas bzw. Abbrandgas in den Zwischenraum 45 einströmen, ohne dass die Strömungsgeschwindigkeit des Gases ansteigen muss. Infolgedessen wird das Brennkammersieb 50 über die ganze Filterfläche 53 hinweg gleichmäßig durchströmt und somit optimal ausgenutzt.

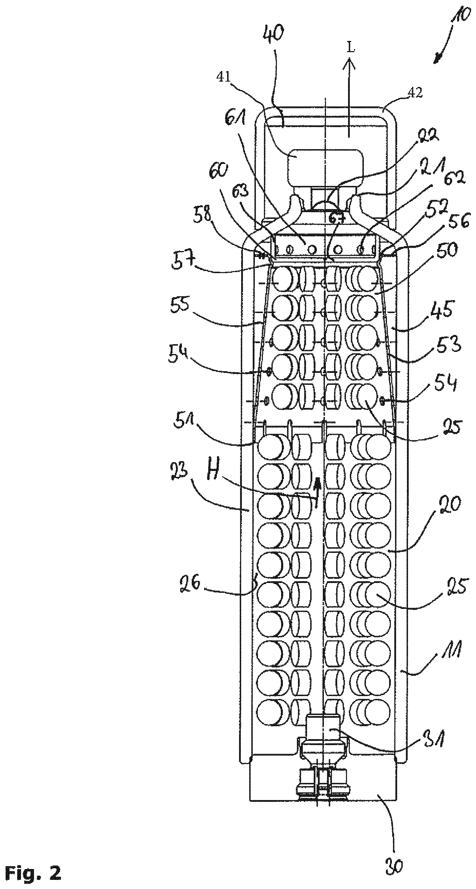

In Fig. 2 ist eine weitere Ausführungsform eines erfindungsgemäßen Gasgenerators 10 dargestellt. Auch in diesem Fall handelt es sich um einen Hybridgasgenerator. Dieser weist große Übereinstimmungen mit dem Gasgenerator der Fig. 1 auf. Im Folgenden wird lediglich auf die Unterschiede zu dem Ausführungsbeispiel der Fig. 1 eingegangen.

Das Brennkammersieb 50 gemäß der Ausführungsform der Fig. 2 weist am diffusorseitigen Ende 52 einen vollumfänglich ausgebildeten Flansch 56 auf. Des Weiteren ist eine Einkerbung 57 zu erkennen. Das Absatzelement 60 liegt an der Einkerbung 57 am Brennkammersieb 50 an. Das Brennkammersieb 50 kann an der Einkerbung 57 beispielsweise mittels einer Schweißnaht mit dem Absatzelement 60 verbunden sein. Das Absatzelement 60 weist wiederum eine hohlzylinderförmige Gaszwischenkammer 61 auf. Über angedeutete Flanschöffnungen 58 kann das im Zwischenraum 45 befindliche Gas über die Einströmöffnungen 62 in die Gaszwischenkammer 61 gelangen. Vorzugsweise ist die Wandung 63 der Gaszwischenkammer 61 mit der Innenseite 26 der Kammerwandung 23 in Kontakt.

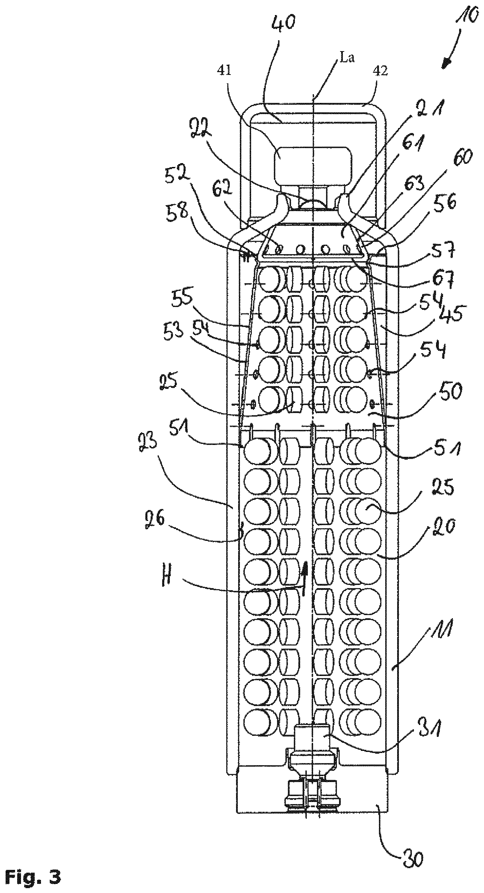

In Fig. 3 wird eine weitere Ausführungsform eines erfindungsgemäßen Gasgenerators 10, insbesondere eines Hybridgasgenerators, dargestellt. Diese weist große Übereinstimmungen mit der Ausführungsform der Fig. 2 auf. Im Folgenden wird lediglich auf die Unterschiede zu dem Ausführungsbeispiel der Fig. 2 eingegangen. Das Brennkammersieb 50 weist ebenfalls einen Flansch 56 sowie eine Einkerbung 57 und Flanschöffnungen 58 auf. Der Unterschied ist hinsichtlich der Form des Absatzelementes 60, insbesondere der Form der Gaszwischenkammer 61 zu erkennen. Die Wandung 63 ist derart geformt, dass eine hohle Kegelstumpfform gebildet ist. Dadurch kann ein größerer Raum für Schlackeablagerung im Vergleich zur Ausführungsform der Fig. 2 geschaffen werden. Damit ist gemeint, dass zwischen der Außenseite der Wandung 63 und der der Wandung 63 gegenüberliegenden Innenseite 26 der Kammerwandung 23 ein relativ großer Raum für Schlackeablagerung ausgebildet werden kann. Das Absatzelement 60, insbesondere die Absatzfläche 67 dient der Abdichtung des Brennkammersiebs 50 in Längsrichtung L des Gasgenerators 10 bzw. in Hauptströmungsrichtung H des Abbrandgases. Daher wird das Abbrandgas gezwungen, durch die Filteröffnungen 54 in den Zwischenraum 45 zu strömen.

Kombinationen der Ausführungsformen der Figuren 1-3 sind möglich. Insbesondere ist es möglich, dass das Brennkammersieb 50 und das Absatzelement 60 einteilig, d.h. monolithisch, ausgebildet sind.

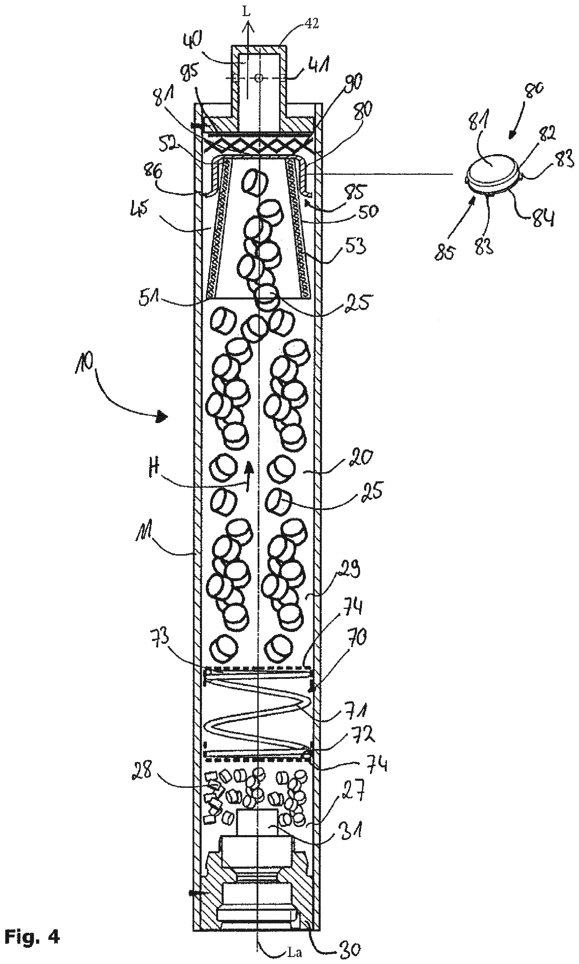

In Fig. 4 ist eine weitere Ausführungsform eines Gasgenerators 10 dargestellt. In diesem Fall handelt es sich um einen pyrotechnischen Gasgenerator. Dieser Gasgenerator 10 umfasst ebenfalls eine Anzündeinheit 30 und eine Kammer 20, nämlich eine Brennkammer. Darin befindet sich ebenfalls ein Treibstoffbett 25. Bezüglich der Ausführungsform des Treibstoffbettes 25 gilt vorher Erläutertes. In einem ersten Abschnitt 27 der Kammer 20 ist ein Anzündmittel 28 ausgebildet. Der erste Abschnitt 27 der Kammer 20 reicht von der Anzündeinheit 30 bis zu einem Füllkörperelement 70. Das Füllkörperelement 70 ist im Ruhezustand des Gasgenerators 10 derart zwischen dem Anzündmittel 28 und dem Treibstoffbett 25 angeordnet, dass das Füllkörperelement 70 das Anzündmittel 28 und das Treibstoffbett 25 in ihren Lagen, also in ihren jeweiligen Positionen, fixiert. Eine größere Relativbewegung der einzelnen Treibstofftabletten und/oder einzelner pyrotechnischer Formkörper werden mithilfe des Füllkörperelements 70 vermieden.

Das Füllkörperelement 70 ist federnd ausgebildet und weist mehrere Bauteile auf. Im dargestellten Beispiel umfasst das Füllkörperelement 70 eine Feder 71. Die Feder 71 ist als Schraubenfeder ausgebildet und weist zwei stirnseitige Endabschnitte 72 und 73 auf. Der erste stirnseitige Endabschnitt 72 weist in Richtung der Anzündeinheit 30. Der gegenüberliegende zweite stirnseitige Endabschnitten 73 weist in Richtung des Diffusors 42. Das Füllkörperelement 70 weist an beiden stirnseitigen Endabschnitt 72 und 73 der Feder 71 ein, insbesondere lochplattenartiges und/oder gitterartiges und/oder streckgitterartiges, Abschlusselement 74 auf. Das Füllkörperelement 70 ist somit im Funktionsfall des Gasgenerators 10 von Gas bzw. Abbrandgas durchströmbar. Die Abschlusselemente 74 können des Weiteren eine Siebfunktion bzw. eine Filterfunktion haben. Die Anzündmittel 28 können nicht durch das Füllkörperelement 70 in einen zweiten Abschnitt 29 der Kammer 20 gelangen. Im Funktionsfall ist das Füllkörperelement 70 von Anzündschwaden des Anzünders 31 durchströmbar. Die erzeugten Anzündschwaden strömen somit in Richtung des zweiten Abschnittes 29 der Kammer 20 und somit in Richtung des Treibstoffbetts 25.

Das Brennkammersieb 50 ist im dargestellten Beispiel aus einem Gewebe gebildet. Die Filteröffnungen 54 ergeben sich aufgrund von Maschenweiten des Gewebes. Das diffusorseitige Ende 52 ist in ein topfartiges Element 80 eingeführt. Das Brennkammersieb, insbesondere das diffusorseitige Ende 52 des Brennkammersiebs 50 liegt dabei an einem Topfboden 81 des topfartiges Elements 80 auf. Das topfartige Element 80 weist an einer Seitenwand 82 des topfartigen Elements 80, insbesondere an einem anzünderseitigen Ende 85 des topfartigen Elements 80 einen schmalen Umfangsflansch 84 und vier Laschen 83 auf. Das topfartige Element 80 wird über die Laschen 83 in der Kammer 20 zentriert. Zwischen dem topfartigen Element 80 und der Innenseite 26 der Kammerwandung 23 wird ein ringförmiger Kanal 86 gebildet, durch den das aus den Filteröffnungen 54 des Brennkammersiebs 50 ausströmende Gas in Richtung des Diffusors 42 strömen kann.

In Fig. 4 ist des Weiteren ein Stützelement 90 zu erkennen. Dieses Stützelement 90 stützt das topfartige Element 80 in axialer Richtung ab und lenkt bzw. lässt den Gasstrom radial nach innen strömen. Das Stützelement 90 kann aus Drahtgewebe, Streckmetall oder ähnlichem Material bestehen. An dem Stützelement 90 kühlt das durchströmende Gas ab. Des Weiteren kommt es am Stützelement 90 zu Schlackeablagerungen. Zum Stützelement 90 axial nachgelagert ist eine Verdämmung 95 ausgebildet. Diese Verdämmung 95 kann aus einer Metallfolie, z.B. aus einer Stahl-, Aluminium- oder Kupferfolie, gebildet sein. Sobald nach Aktivierung des Gasgenerators 10 die Verdämmung 95 durch einen entsprechenden Druck geöffnet bzw. aufgerissen worden ist, kann das Gas die aufgerissene Verdämmung 95 passieren und in die Diffusorkammer 40 gelangen. Durch die Diffusoröffnungen 41 kann das Gas, das innerhalb des Gasgenerators 10 mehrfach abgekühlt worden ist und dessn Schlackebestandteile mehrfach gefiltert wurden, in einen Gassack strömen.

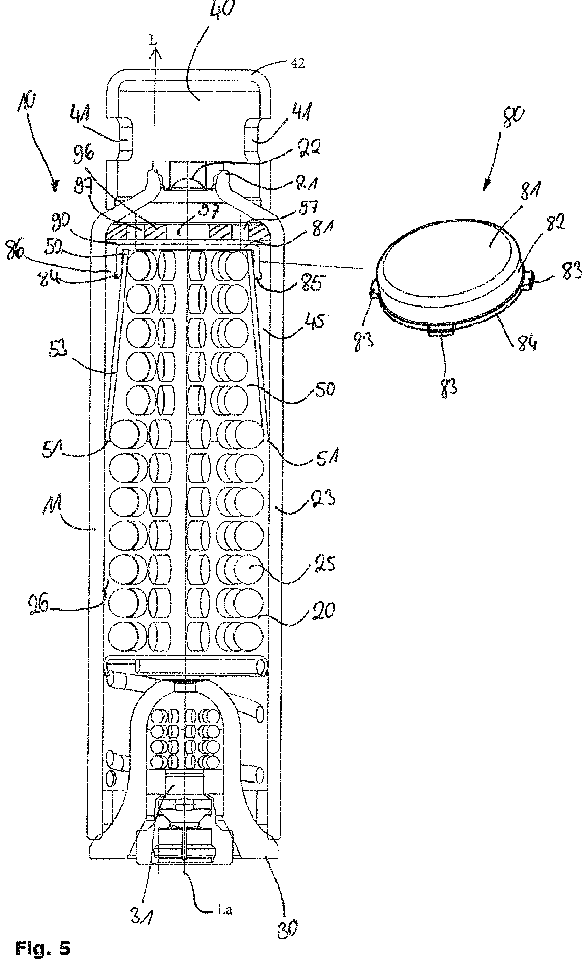

In Fig. 5 ist ein Gasgenerator 10 dargestellt, der als Hybridgasgenerator ausgebildet ist. Der Aufbau des Brennkammersiebs 50 entspricht im Wesentlichen dem Aufbau des Brennkammersiebs gemäß Ausführungsform der Fig. 4. Auch das topfartige Element 80 ist im Wesentlichen wie in der Fig. 4 ausgebildet. Bei dem Gasgenerator 10 gemäß Fig. 5 handelt es sich um einen Hybridgasgenerator, so dass es sich bei der Kammer 20 um eine Druckgaskammer handelt. Dem topfartigen Element 80 ist wiederum ein Stützelement 90 axial nachgelagert. Das Stützelement 90 ist vorzugsweise aus einem Gewebe gebildet.

Dem Stützelement 90 axial nachgelagert ist eine Scheibe 96 mit Scheibenöffnungen 97. Sobald das bereits mehrfach abgekühlte Gas die Scheibenöffnungen 97 durchströmt hat, wird das Berstelement 22 der Druckgaskammer 20 geborsten. Anschließend kann das Gas durch die Diffusoröffnungen 41 aus dem Gasgenerator 10 strömen und in einen Gassack einströmen.

### Bezugszeichenliste

- 10: Gasgenerator
- 11: Gehäuse
- 20: Kammer
- 21: Diffusorseitiger Auslass
- 22: Berstelement
- 23: Kammerwandung
- 25: Treibstoffbett
- 26: Innenseite
- 27: Erster Abschnitt Kammer
- 28: Anzündmittel
- 29: Zweiter Abschnitt Kammer
- 30: Anzündeinheit
- 31: Anzünder
- 40: Diffusorkammer
- 41: Diffusoröffnung
- 42: Diffusor
- 45: Zwischenraum
- 50: Brennkammersieb
- 51: Anzünderseitiges Ende
- 52: Diffusorseitiges Ende
- 53: Filterfläche
- 54: Filteröffnung
- 55: Außenseite
- 56: Flansch
- 57: Einkerbung
- 58: Flanschöffnung
- 60: Absatzelement
- 61: Gaszwischenkammer
- 62: Einströmöffnung
- 63: Wandung
- 64: Absatzelement-Flansch
- 65: Gasdurchlassöffnung
- 66: Hülsenabschnitt
- 67: Absatzfläche
- 70: Füllkörperelement
- 71: Feder
- 72: Stirnseitiger Endabschnitt
- 73: Stirnseitiger Endabschnitt
- 74: Abschlusselement
- 80: Topfartiges Element
- 81: Topfboden
- 82: Seitenwand
- 83: Lasche
- 84: Umfangsflansch
- 85: Anzünderseitiges Ende
- 86: Ringförmiger Kanal
- 90: Stützelement
- 95: Verdämmung
- 96: Scheibe
- 97: Scheibenöffnung
- H: Hauptströmungsrichtung
- L: Längsrichtung
- La: Längsachse

## Patentansprüche

1. Gasgenerator (10), umfassend eine Anzündeinheit (30) mit einem Anzünder (31), eine der Anzündeinheit (30) axial nachgelagerte langgestreckte, zylindrische Kammer (20) und eine der Kammer (20) axial nachgelagerte Diffusorkammer (40), die von einem Diffusor (42) umfasst ist, wobei in der langgestreckten, zylindrischen Kammer (20) ein Brennkammersieb (50) mit einem anzünderseitigen Ende (51) und einem diffusorseitigen Ende (52) angeordnet ist, wobei das Brennkammersieb (50) in Längsrichtung (L) des Gasgenerators (10), ausgehend von dem Anzünder (31) hin zu dem Diffusor (42), verjüngend zuläuft,
**dadurch gekennzeichnet, dass**
das Brennkammersieb (50) am diffusorseitigen Ende (52) derart in ein topfartiges Element (80) eingeführt ist, dass das Brennkammersieb (50) an einem Topfboden (81) des topfartigen Elements (80) aufliegt.

2. Gasgenerator (10) nach Anspruch 1,
**dadurch gekennzeichnet, dass**
das Brennkammersieb (50) aus Streckmetall und/oder Lochblech und/oder Gewebe besteht und/oder als konisches Kegelsegment, insbesondere Kegelstumpfsegment, ausgebildet ist.

3. Gasgenerator (10) nach Anspruch 1 oder 2,
**dadurch gekennzeichnet, dass**
ein Abschnitt des Brennkammersiebs (50) mit größtem Durchmesser, insbesondere das anzünderseitige Ende (51), derart dimensioniert ist, dass das Brennkammersieb (50) mittels Presssitz an einer Innenseite (26) einer Kammerwandung (23) der Kammer (20) anliegt.

4. Gasgenerator (10) nach einem der vorhergehenden Ansprüche,
**dadurch gekennzeichnet, dass**
ein von Abbrandgas durchströmbarer Querschnitt eines zwischen dem Brennkammersieb (50) und der Innenseite (26) der Kammerwandung (23) ausgebildeten Zwischenraums (45) in Längsrichtung (L) des Gasgenerators (10), vorzugsweise in einer Hauptströmungsrichtung (H) eines Abbrandgases, insbesondere kontinuierlich, zunimmt.

5. Gasgenerator (10) nach einem der vorhergehenden Ansprüche,
**dadurch gekennzeichnet, dass**
das Brennkammersieb (50) am diffusorseitigen Ende (52) auf einem Absatzelement (60), das insbesondere eine hohlzylinderförmige oder hohlkegelstumpfförmige Gaszwischenkammer (61) umfasst, aufsitzt, wobei vorzugsweise das Brennkammersieb (50) mit dem Absatzelement (60) einteilig ausgebildet ist.

6. Gasgenerator (10) nach Anspruch 5,
**dadurch gekennzeichnet, dass**
das Brennkammersieb (50) am diffusorseitigen Ende (52) einen, insbesondere vollumfänglich ausgebildeten, Flansch (56) aufweist, wobei vorzugsweise der Flansch (56) des Brennkammersiebs (50) mit dem Absatzelement (60) verbunden ist.

7. Gasgenerator (10) nach einem der vorhergehenden Ansprüche 5 bis 6,
**dadurch gekennzeichnet, dass**
das Absatzelement (60) einen zur Anzündeinheit (30) weisenden Hülsenabschnitt (66) aufweist, in den das diffusorseitige Ende (52) des Brennkammersiebs (50) eingeführt ist.

8. Gasgenerator (10) nach einem der vorhergehenden Ansprüche,
**dadurch gekennzeichnet, dass**
das topfartige Element (80) umfangsseitig mindestens zwei Laschen (83) und/oder einen Umfangsflansch (84) aufweist.

9. Gasgenerator (10) nach einem der vorhergehenden Ansprüche,
gekenzeichnet durch
ein dem topfartigen Element (80) in Längsrichtung (L) des Gasgenerators (10), vorzugsweise in Hauptströmungsrichtung (H) des Abbrandgases, axial nachgelagertes Stützelement (90), das insbesondere aus Streckmetall und/oder Lochblech und/oder Gewebe und/oder Maschengestrick und/oder Drahtgewebe gebildet ist.

10. Gasgenerator (10) nach Anspruch 9,
**gekennzeichnet durch**
eine dem Stützelement (90) in Längsrichtung (L) des Gasgenerators (10), vorzugsweise in Hauptströmungsrichtung (H) des Abbrandgases, axial nachgelagerte Verdämmung (95) und/oder Scheibe (96) mit Scheibenöffnungen (97).

11. Gassackmodul mit einem Gasgenerator (10), einem von dem Gasgenerator (10) aufblasbaren Gassack und einer Befestigungseinrichtung zur Anbringung des Gassackmoduls an einem Fahrzeug, **dadurch gekennzeichnet, dass** der Gasgenerator (10) nach einem der vorhergehenden Ansprüche ausgebildet ist.

12. Fahrzeugsicherheitssystem, insbesondere zum Schutz einer Person, beispielsweise eines Fahrzeuginsassen oder Passanten, mit einem Gasgenerator (10), einem von diesem aufblasbaren Gassack, als Teil eines Gassackmoduls, und einer elektronischen Steuereinheit, mittels der der Gasgenerator (10) bei Vorliegen einer Auslösesituation aktivierbar ist, **dadurch gekennzeichnet, dass** der Gasgenerator (10) nach einem der vorhergehenden Ansprüche 1 bis 10 ausgebildet ist.

## Claims

1. An inflator (10) comprising an ignition unit (30) including an igniter (31), an elongate cylindrical chamber (20) arranged axially downstream of the ignition unit (30) and a diffuser chamber (40) arranged axially downstream of the chamber (20) being comprised by a diffuser (42), wherein a combustion chamber screen (50) having an igniter-side end (51) and a diffuser-side end (52) is arranged in the elongate cylindrical chamber (20), the combustion chamber screen (50) being tapered in the longitudinal direction (L) of the inflator (10) from the igniter (31) toward the diffuser (42),
**characterized in that**
the combustion chamber screen (50) is inserted in a pot-shaped element (80) at the diffuser-side end (52) so that the combustion chamber screen (50) rests on a pot bottom (81) of the pot-shaped element (80).

2. The inflator (10) according to claim 1,
**characterized in that**
the combustion chamber screen (50) is made of expanded metal and/or perforated sheet and/or fabric and/or is configured as a tapered cone segment, especially truncated cone segment.

3. The inflator (10) according to claim 1 or 2,
**characterized in that**
a section of the combustion chamber screen (50) having the maximum diameter, especially the igniter-side end (51) is dimensioned so that the combustion chamber screen (50) abuts on an inner face (26) of a chamber wall (23) of the chamber (20) by means of press-fit.

4. The inflator (10) according to any one of the preceding claims,
**characterized in that**
a cross-section of clearance (45) through which combustion gas may flow which is formed between the combustion chamber screen (50) and the inner face (26) of the chamber wall (23) increases, especially continuously in the longitudinal direction (L) of the inflator (10), preferably in a main flow direction (H) of a combustion gas.

5. The inflator (10) according to any one of the preceding claims,
**characterized in that**
the combustion chamber screen (50) rests at the diffuser-side end (52) on a shoulder element (60) which comprises especially a hollow-cylindrical or hollow truncated cone-shaped intermediate gas chamber (61), wherein preferably the combustion chamber screen (50) is formed integrally with the shoulder element (60).

6. The inflator (10) according to claim 5,
**characterized in that**
the combustion chamber screen (50) includes a flange (56), formed especially fully circumferentially, at the diffuser-side end (52), wherein the flange (56) of the combustion chamber screen (50) is preferably connected to the shoulder element (60).

7. The inflator (10) according to any one of the preceding claims 5 to 6,
**characterized in that**
the shoulder element (60) comprises a sleeve portion (66) pointing in the direction of the ignition unit (30) into which the diffuser-side end (52) of the combustion chamber screen (50) is inserted.

8. The inflator (10) according to any one of the preceding claims,
**characterized in that**
the pot-shaped element (80) includes at least two tabs (83) and/or one circumferential flange (84) on the circumferential side.

9. The inflator (10) according to any one of the preceding claims,
**characterized by**
a support element (90) arranged axially downstream of the pot-shaped element (80) in the longitudinal direction (L) of the inflator (10), preferably in the main flow direction (H) of the combustion gas, which support element is made especially from expanded metal and/or perforated sheet and/or fabric and/or knitted wire and/or wire mesh.

10. The inflator (10) according to claim 9,
**characterized by**
a plugging (95) and/or a disk (96) having a disk opening (97) arranged axially downstream of the support element (90) in the longitudinal direction (L) of the inflator (10), preferably in the main flow direction (H) of the combustion gas.

11. An airbag module comprising an inflator (10), an airbag inflatable by the inflator (10) and a fastening device for attaching the airbag module to a vehicle, **characterized in that** the inflator (10) is configured according to any one of the preceding claims.

12. A motor vehicle safety system, especially for protecting a person such as a vehicle occupant or a pedestrian, comprising an inflator (10), an airbag inflatable by the latter and being part of an airbag module, and an electronic control unit by means of which the inflator (10) can be activated when a release situation is given, **characterized in that** the inflator (10) is configured according to any one of the preceding claims 1 to 10.

## Revendications

1. Générateur de gaz (10) comprenant une unité d'allumage (30) avec un initiateur (31), une chambre cylindrique allongée (20) axialement disposée en aval de l'unité d'allumage (30) et une chambre diffuseur (40) axialement disposée en aval de la chambre (20), qui est entourée par un diffuseur (42), pour lequel dans chambre cylindrique allongée (20) est agencé un filtre de chambre de combustion (50) avec une extrémité côté unité d'allumage (51) et une extrémité côté diffuseur (52), pour lequel le filtre de la chambre de combustion (50) dans la direction longitudinale (L) du générateur de gaz (10) se rétrécit en partant de l'allumeur (31) vers le diffuseur (42), **caractérisé en ce que**
le filtre de chambre de combustion (50) est inséré dans un élément en forme de pot (80) à l'extrémité côté diffuseur (52) de telle sorte que le filtre de chambre de combustion (50) repose sur un fond de pot (81) de l'élément en forme de pot (80).

2. Générateur de gaz (10) selon la revendication 1,
**caractérisé en ce que**
le filtre de chambre de combustion (50) est constitué de métal déployé et / ou de tôle perforée et / ou de métal tissé et / ou est réalisé sous la forme d'un segment de cône conique, en particulier un segment de cône tronqué.

3. Générateur de gaz (10) selon la revendication 1 ou 2,
**caractérisé en ce que**
une partie du filtre de chambre de combustion (50) avec le plus grand diamètre, en particulier l'extrémité (51) du côté de l'allumeur, est dimensionnée de telle sorte que le filtre de la chambre de combustion (50) repose contre un côté intérieur (26) d'une paroi de chambre (23) de la chambre (20) au moyen d'un ajustement serré.

4. Générateur de gaz (10) selon l'une des revendications précédentes,
**caractérisé en ce que**
une section transversale d'un espace (45) formé entre le filtre de la chambre de combustion (50) et l'intérieur (26) de la paroi de la chambre (23) à travers laquelle le gaz de combustion peut s'écouler augmente dans la direction longitudinale (L) du générateur de gaz (10), de préférence dans une direction d'écoulement principale (H) d'un gaz de combustion, en particulier continuellement.

5. Générateur de gaz (10) selon l'une des revendications précédentes,
**caractérisé en ce que**
le filtre de chambre de combustion (50) à l'extrémité (52) côté diffuseur repose sur un élément d'épaulement (60) qui comprend notamment une chambre de gaz intermédiaire creuse cylindrique ou tronconique (61), pour lequel le filtre de chambre de combustion (50) est de préférence formé d'une seule pièce avec l'élément d'épaulement (60).

6. Générateur de gaz (10) selon la revendication 5,
**caractérisé en ce que**
le filtre de chambre de combustion (50) à l'extrémité (52) du côté diffuseur présente un rebord (56), en particulier un rebord (56) qui est formé sur toute la circonférence, pour lequel de préférence le rebord (56) du filtre de chambre de combustion (50) est relié à l'élément d'épaulement (60).

7. Générateur de gaz (10) selon l'une des revendications 5 à 6 précédentes,
**caractérisé en ce que**
l'élément d'épaulement (60) a une partie manchon (66) faisant face à l'unité d'allumage (30) dans laquelle l'extrémité côté diffuseur (52) du filtre de chambre de combustion (50) est insérée.

8. Générateur de gaz (10) selon l'une des revendications précédentes,
**caractérisé en ce que**
l'élément en forme de pot (80) présente au moins deux pattes (83) et / ou un rebord périphérique (84) sur le côté circonférentiel.

9. Générateur de gaz (10) selon l'une des revendications précédentes,
**caractérisé en ce que**
un élément de support (90) axialement en aval de l'élément en forme de pot (80) dans la direction longitudinale (L) du générateur de gaz (10), de préférence dans la direction principale d'écoulement (H) du gaz de combustion, est notamment réalisé en métal déployé et / ou tôle perforée et /ou métal tissé et / ou tricot métallique et / ou un treillis métallique.

10. Générateur de gaz (10) selon la revendication 9,
**caractérisé en ce que**
un opercule (95) et / ou disque (96) avec des ouvertures de disque (97) axialement en aval de l'élément de support (90) dans la direction longitudinale (L) du générateur de gaz (10), de préférence dans la direction principale d'écoulement (H) du gaz de combustion.

11. Module airbag avec un générateur de gaz (10), un coussin gonflable qui peut être gonflé à l'aide de générateur de gaz (10) et un dispositif de fixation pour la fixation du module airbag sur un véhicule, **caractérisé en ce que** le générateur de gaz (10) est conçu selon l'une des revendications précédentes.

12. Système de sécurité du véhicule, notamment pour la protection d'une personne, par exemple un occupant de véhicule ou des passants, avec un générateur de gaz (10), un coussin gonflable qui peut être gonflé par celui-ci, dans le cadre d'un module airbag, et une unité de commande électronique, au moyen de laquelle le générateur de gaz (10) peut être activé, se déclenche lorsqu'une situation de déclenchement se produit, **caractérisé en ce que** le générateur de gaz (10) est conçu selon l'une des revendications 1 à 10 précédentes.
